# EUROPEAN PATENT APPLICATION

(11) **EP 1 859 672 A2**
(43) Date of publication of application: **28.11.2007**
(21) Application number: 07250293.3
(22) Date of filing: 24.01.2007
(51) Int. Cl.: A01G 3/053

(54) **Hedge trimmer**

(30) Priority: 26.05.2006 GB 0610528
(71) Applicant: Husqvarna UK Limited, County Durham, DL5 6UP (GB)
(72) Inventor: Coates, Neil Andrew, Sedgefield, Co Durham TS21 3AX (GB); Trevor,Michael Darmon, Darlington, Co Durham DL3 8UF (GB)
(74) Representative: Pratt, David Martin

(57) **Abstract**

A hedge trimmer comprises an elongate cutter (3) and a collector (4) extending along, and associated with, the cutter. The collector (4) is constituted by two collector portions (4a, 4b) defining a substantially V-shaped configuration, each collector portion being configured in such a manner as to define a collection space for clippings cut by the cutter.

## Description

This invention relates to a hedge trimmer, and in particular to a hedge trimmer provided with means for collecting clippings produced by use of the hedge trimmer.

A conventional hedge trimmer has a pair of reciprocal blades driven by a motor. During trimming of a hedge using such a hedge trimmer, a large volume of unwanted clippings and other debris is created. Usually, this drops to the ground adjacent to the hedge being clipped. This has to be swept or raked up after the hedge clipping process has been completed. This is a monotonous, time-consuming and messy task, particularly if the clippings have to be removed from a flower bed or a lawn.

A known hedge trimmer has an L-shaped shield detachably fixed at either side of the blades. The hedge trimmer can then be used to sweep cuttings off the top of a hedge being cut. The shield also provides a limited clippings collection facility. This hedge trimmer can also be used to cut the vertical side of a hedge, in which case the shield provides an extremely limited clippings collection facility. It can, however, only be used easily to collect clippings when moved in one direction (say from left to right) when cutting the top of a hedge, or up when cutting the side of a hedge. Also, it can be used comfortably by either a right-hander or a left-hander, depending upon which side of the blades the shield is fixed.

Moreover, the shield has limited collection space, and retention of clippings as the hedge trimmer is swept over the surface of a hedge is limited.

An aim of the invention is to provide a hedge trimmer having an improved form of collector that can collect when cutting in both directions and for left-handed and right-handed use.

The present invention provides a hedge trimmer comprising an elongate cutter and a collector extending along, and associated with, the cutter, wherein the collector is constituted by at least one collector portion inclined at an angle relative to the cutter, a longitudinal edge portion of the collector being fixed relative to the cutter, the or each collector portion being configured in such a manner as to define with the cutter a trough-shaped collection space for clippings cut by the cutter, whereby when the cutter is orientated for cutting the side of a hedge with a collector portion facing upwards, that collector portion collects and retains the clippings.

In a preferred embodiment, the cutter is constituted by a pair of reciprocable blades, and the blades are mounted on an elongate support.

In a preferred embodiment, the collector is constituted by two collector portions defining a substantially V-shaped configuration. Advantageously, the V-shaped collector portions are positioned symmetrically with respect to a central longitudinal plane at right-angles to the plane of the cutter.

Preferably, the collector is detachably fixed to the support. Advantageously, that portion of the collector forming the base of the V is provided with a channel-shaped support-member detachably fitted over the support.

Conveniently, each collector portion is curved in such a manner that its concave surface faces away from the concave surface of the other collector portion.

Advantageously, the collector is made of a plastics material, preferably a transparent plastics material such as polycarbonate.

In a preferred embodiment, the collector is constituted by a single plate-like collector portion inclined at an angle relative to the cutter, the plate-like collector portion being positioned and configured in such a manner as to define with the cutter a collection space for clippings cut by the cutter.

Preferably, the plate-like collector portion is provided with locking means for fixing the plate-like collection portion to the cutter in either of two positions in which it is inclined relative to the cutter, the plate-like collector portion being on opposite sides of a plane extending along and perpendicular to the cutter in its two positions.

The invention also provides a hedge trimmer collector constituted by two collector portions defining a substantially V-shaped configuration, the base of the V being adapted for engagement with a support for the cutter of a hedge trimmer, and each collector portion being configured in such a manner as to define with the cutter/collection space for clippings cut, in use, by the cutter.

The invention will now be described in greater detail, by way of example, with reference to the drawings, in which:-
Figure 1 is a perspective view of a hedge trimmer constructed in accordance with the invention, the hedge trimmer being shown in a position for cutting the side of a hedge;
Figure 2 is a perspective view of the hedge trimmer, shown in position for cutting the top of a hedge; and
Figure 3 is a perspective view of the hedge trimmer of Figure 1, shown in a position for disposing collected clippings.

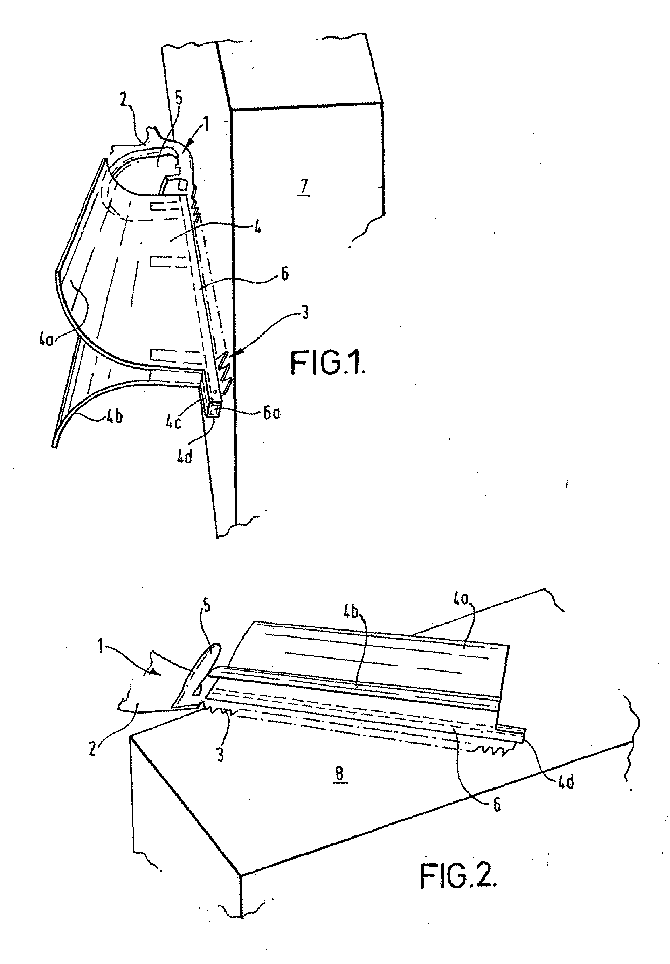

Referring to the drawings, Figure 1 shows a hedge trimmer having a main body 1 housing an electric motor (not shown), a handle portion 2, a pair of reciprocable blades 3 and a collector 4. The collector 4 is made of a transparent plastics material such as polycarbonate, and extends along the blades 3. As the collector 4 is transparent, it does not materially affect the user's view of a trimming operation. A guard 5 is also provided to protect the hands of the user from contact with the blades 3.

The collector 4 has a generally V-shaped configuration having two concave collector portions 4a and 4b joined (at the base of the V) by a web portion 4c. A rectangular section channel 4d extends downwardly from the web portion 4c, and sits on a complementarily-shaped support portion 6a of an elongate blade support 6, and is held in position by a hook (not shown) at one end, and by a hand-supported screw (not shown) at the other end.

Figure 1 shows the hedge trimmer in the position suitable for cutting the side of a hedge (indicated schematically by the reference numeral 7) by a left-handed user. In this position, when the motor is turned on to drive the blades 3, and the hedge trimmer is moved up the side 7 of the hedge, hedge clippings are collected in the curved collector portion 4a. If the side 7 of the hedge is then to be cut by a right-hander, the hedge trimmer is turned upside down so that the other collector portion 4b is uppermost, and clippings are collected in that collector portion as the hedge trimmer moves up the side 7 of the hedge. In either case, the free end portion at the top edge of the collector portion 4a or 4b prevents clippings from falling out of that collector portion as trimming proceeds, and collection only occurs when the hedge trimmer cuts as it moves upwards.

Figure 2 shows the hedge trimmer in position to cut the top of a hedge (indicated schematically by the reference numeral 8). In this configuration, the two collector portions 4a and 4b are not effective to collect clippings, but clippings can be swept off the top 8 of the hedge onto a sheet (not shown) for collection.

In this configuration, the symmetrical nature of the collector 4 ensures that sweeping of clippings collection can be effective for movement in either direction across the top 8 of the hedge, and the machine can be used effectively by both right handers and left handers.

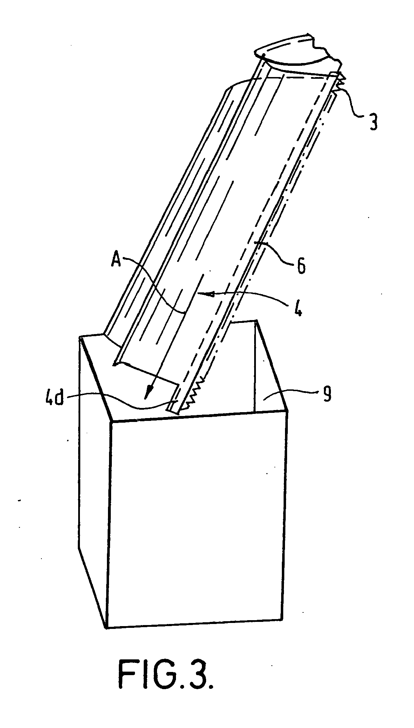

When either of the collector portions 4a or 4b is full, the hedge trimmer can be turned off and the machine can be tipped back slightly to retain the clippings whilst the free end of the collector 4 is moved over a collection vessel 9 (see Figure 3). The end of the collector 4 furthest from the operator can then be lowered into the opening of the collection vessel 9, so that the clippings can slide along the collector (as indicated by the arrow A) and into the collection vessel.

In a modified embodiment, the collector can be constituted by a single plate-like collector portion, inclined at an angle relative to the blades 3. In this case, the collector will collect clippings in only one direction of movement. In a further modification, however, the collector portion can be arranged to be movable between two positions, in either of which it is inclined relative to the blades, the collector portion being on opposite sides of a plane extending along, and perpendicular to, the blades in its two positions. The collector portion can be locked in each of these positions, so that collection of clippings can take place in either direction of movement of the hedge trimmer.

## Claims

1. A hedge trimmer comprising an elongate cutter (3) and a collector (4) extending along, and associated with, the cutter, wherein the collector is constituted by at least one collector portion (4a, 4b) inclined at an angle relative to the cutter, a longitudinal edge portion (4c) of the collector being fixed relative to the cutter, the or each collector portion being configured in such a manner as to define with the cutter a trough-shaped collection space for clippings cut by the cutter, whereby when the cutter is orientated for cutting the side of a hedge with a collector portion facing upwards, that collector portion collects and retains the clippings.

2. A hedge trimmer as claimed in claim 1, wherein the cutter is constituted by a pair of reciprocable blades (3).

3. A hedge trimmer as claimed in claim 2, wherein the blades (3) are mounted on an elongate support (6).

4. A hedge trimmer as claimed in any one of claims 1 to 3, wherein the collector is constituted by two collector portions (4a and 4b) defining a substantially V-shaped configuration.

5. A hedge trimmer as claimed in claim 4, wherein the V-shaped collector portions (4c, 4b) are positioned symmetrically with respect to a central longitudinal plane at right-angles to the plane of the cutter (3).

6. A hedge trimmer as claimed in either claim 4 or claim 5 when appendent to claim 2, wherein the collector (4) is detachably fixed to the support (6).

7. A hedge trimmer as claimed in any one of claims 4 to 6, wherein that portion (4c) of the collector forming the base of the V is provided with a channel-shaped support member (6a) detachably fitted over the support (6).

8. A hedge trimmer as claimed in anyone of claims 4 to 7, wherein each collector portion (4a, 4b) is curved in such a manner that its concave surface faces away from the concave surface of the other collector portion.

9. A hedge trimmer as claimed in any one of claims 1 to 7, wherein the collector (4) is made of a plastics material.

10. A hedge trimmer as claimed in claim 9, wherein the collector (4) is made of a transparent plastics material such as polycarbonate.

11. A hedge trimmer as claimed in any one of claims 1 to 3, wherein the collector (4) is constituted by a single plate-like collector portion inclined at an angle relative to the cutter (8), the plate-like collector portion being positioned and configured in such a manner as to define with the cutter a collection space for clippings cut by the cutter.

12. A hedge trimmer as claimed in claim 11, wherein the plate-like collector portion is provided with locking means for fixing the plate-like collector portion to the cutter (3) in either of two positions in which it is inclined relative to the cutter, the plate-like collector portion being on opposite sides of a plane extending along and perpendicular to the cutter in its two positions.

13. A hedge trimmer collector (4) constituted by two collector portions (4a, 4b) defining a substantially V-shaped configuration; the base (4c) of the V being adapted for engagement with a support (6) for the cutter (3) of a hedge trimmer, and each collector portion being configured in such a manner as to define with the cutter, a collection space for clippings cut, in use, by the cutter.
